(19) Europäisches Patentamt
European Patent Office
Office européen des brevets

(11) **EP 1 393 025 B1**

(12) **EUROPÄISCHE PATENTSCHRIFT**

(45) Veröffentlichungstag und Bekanntmachung des Hinweises auf die Patenterteilung:
**22.02.2006 Patentblatt 2006/08**

(21) Anmeldenummer: **00991968.9**

(22) Anmeldetag: **08.12.2000**

(51) Int Cl.:
*G01H 5/00* (2006.01)          *G01S 15/58* (2006.01)
*G01S 15/88* (2006.01)          *G01S 15/89* (2006.01)

(86) Internationale Anmeldenummer:
**PCT/DE2000/004390**

(87) Internationale Veröffentlichungsnummer:
**WO 2001/042808 (14.06.2001 Gazette 2001/24)**

(54) **VERFAHREN ZUR BESTIMMUNG DER MITTLEREN SCHALLGESCHWINDIGKEIT IN EINEM WASSERKÖRPER**

METHOD FOR DETERMINING THE MEAN SPEED OF SOUND IN A BODY OF WATER

METHODE POUR DETERMINER LA VITESSE DU SON DANS UN CORPS LIQUIDE

(84) Benannte Vertragsstaaten:
**AT BE CH CY DE DK ES FI FR GB GR IE IT LI LU MC NL PT SE TR**

(30) Priorität: **08.12.1999 DE 19959013**

(43) Veröffentlichungstag der Anmeldung:
**03.03.2004 Patentblatt 2004/10**

(73) Patentinhaber: **Atlas Hydrographic GmbH**
**28211 Bremen (DE)**

(72) Erfinder: **FREKING, Benno**
**28844 Bremen (DE)**

(74) Vertreter: **Schulz, Klaus**
**In der Bredenau 69**
**Fischerhude**
**28870 Ottersberg (DE)**

(56) Entgegenhaltungen:
**EP-A- 0 629 879**          **FR-A- 2 082 332**
**US-A- 5 422 860**          **US-A- 5 460 369**

**Beschreibung**

Die Erfindung betrifft ein Verfahren zum Bestimmen der mittleren Schallgeschwindigkeit eines Gewässers mit einem Fächerlot der im Anspruch 1 angegebenen Art. EP-A- 629 879 offenbart ein Verfahren nach dem Oberbegriff des Anspruchs 1. Auf Forschungs- und Vermessungsschiffen werden Fächerlote eingesetzt, die der Kartierung und Exploration von Gewässern dienen. Dabei wird von einem Fächerlot, das unterhalb des Wasserfahrzeugs angeordnet ist, ein bis zu 150° großer Winkelsektor erfaßt und gleichzeitig vermessen. In diesem Winkelsektor werden Ultraschallimpulse abgestrahlt und in den eng gebündelten Empfangsrichtungen mit einer fächerförmigen Richtcharakteristik in einer Vielzahl einzelner schmaler Sektoren wieder empfangen. Da die überwiegende Anzahl der Empfangsrichtungen nicht senkrecht sondern schräg nach unten ausgerichtet ist, werden Lotimpulse empfangen, die von einem Auftreffpunkt gestreut bzw. reflektiert worden sind, sich aber nicht linear sondern aufgrund von Schallbeugung auf einem gekrümmten Weg ausgebreitet haben. Die Ursache des gekrümmten Schallstrahlverlaufes liegt in der durch unterschiedliche Schallgeschwindigkeitsschichtungen hervorgerufenen Schallbeugung begründet. Von der unmittelbar am Wandler meßbaren Richtung des Schalleinfallswinkels kann daher nicht linear auf den Auftreffpunkt des Schallstrahls geschlossen werden, der aufgrund der Krümmung erheblich vom Auftreffpunkt des Schalleinfallswinkels abweicht. Durch zusätzliche Ermittlung der Schallgeschwindigkeit in den verschiedenen Schichtungen eines Gewässers, beispielsweise mit einer vom Fahrzeug herabgelassenen Schallmeßsonde, können die Schallgeschwindigkeiten in den verschiedenen Schichtungen gemessen und eine solche mittlere Schallgeschwindigkeit bestimmt werden, wie sie sich für eine lineare Ausbreitung des Lotimpulses vom Auftreffpunkt am Gewässerboden zum Wandler ergeben würde. Ein derartiges Meßverfahren für die mittlere Schallgeschwindigkeit ist für aufeinanderfolgende Messungen von Bodenprofilen eines Gewässers sehr aufwendig, weil das Fahrzeug für den Einsatz der Schallgeschwindigkeitsmeßsonde seine Fahrt ggf. bis zum Stillstand verzögern muß.

Der Erfindung liegt die Aufgabe zugrunde, die Bestimmung der mittleren Schallgeschwindigkeit zu verbessern und zu beschleunigen.

Die Aufgabe wird mit einem Verfahren zum Bestimmen der mittleren Schallgeschwindigkeit eines Gewässers mit einem Fächerlot der im Oberbegriff des Anspruchs 1 angegebenen Art durch die Merkmale im Kennzeichenteil des Anspruchs 1 gelöst.

Bei dem erfindungsgemäßen Verfahren werden je Lotfächer eine Folge von Schallaufzeiten gemessen und daraus die Tiefenwerte berechnet, die jedem Fächerstrahl zugeordnet werden. Diese Zuordnung könnte ebenso bezüglich der Ablage erfolgen, die den Abstand vom Lot des Fahrzeugs zum Auftreffpunkt des jeweiligen Fächerstrahls bestimmt. Wesentlich für die korrekte Bestimmung von Tiefenwert und Ablage ist dabei eine richtig ermittelte mittlere Schallgeschwindigkeit. Da einerseits anzunehmen ist, daß die wahre mittlere Schallgeschwindigkeit von Empfangsrichtung zu Empfangsrichtung sich nicht oder nur unwesentlich ändert, und andererseits der Gewässerboden einen im großen und ganzen ebenen Verlauf hat, müssen mehrfache Vermessungen gleicher Abschnitte eines Bodenprofils gleicher Tiefenwerte und somit gleicher Steigungen ergeben. Steigungsänderungen des Bodenprofils können dann nur durch Abweichungen der angenommenen mittleren von der wahren mittleren Schallgeschwindigkeit hervorgerufen sein.

Durch geeignete Auswahl der Tracks wird beim Überfahren des Gewässerbodens ein Überlappen der Fächerlotungen bewirkt, so daß in dem Überlappungsbereich von zwei Fächerlotungen aus den Tiefenwerten der Bodenprofile die Steigungen der Bodenprofilelemente in einem Teilbereich der Fächerlotungen berechnet und mit dem Berechnungsverfahren der linearen Regression in diesen Teilbereichen eine 1. und eine 2. mittlere Steigung der Bodenprofile berechnet werden. Wenn dann diese beiden Steigungen von einander abweichen, kann hieraus der Vorgabewert für die mittlere Schallgeschwindigkeit zur Berechnung der Tiefenwerte korrigiert werden.

Ein derartiges Meßverfahren ist schnell und sicher und vermeidet jegliche Form der Fahrtunterbrechung durch zusätzliche Sensormessungen. Es wäre sogar möglich, die Bestimmung der mittleren Schallgeschwindigkeit am Ende einer Meßfahrt und somit bei einer nachträglichen Laborauswertung durchzuführen.

Weitere Vorteile des erfindungsgemäßen Verfahrens ergeben sich aus den Unteransprüchen.

Die Erfindung wird nunmehr anhand eines in der Zeichnung dargestellten Ausführungsbeispiels näher erläutert. Es zeigen:

Fig. 1    eine Darstellung der Meßgeometrie,

Fig. 2    einen Bodenprofilausschnitt zur Darstellung von Ablage-, Tiefenwerten und Steigung,

Fig. 3    einen Trackverlauf mit überlappenden Fächerlotungen,

Fig. 4    überlappende Fächerlotungen mit unterschiedlichen Steigungen im Überlappungsbereich

Fig. 5    ein Flußdiagramm,

Fig. 6    ein Blockschaltbild eines Fächerlots.

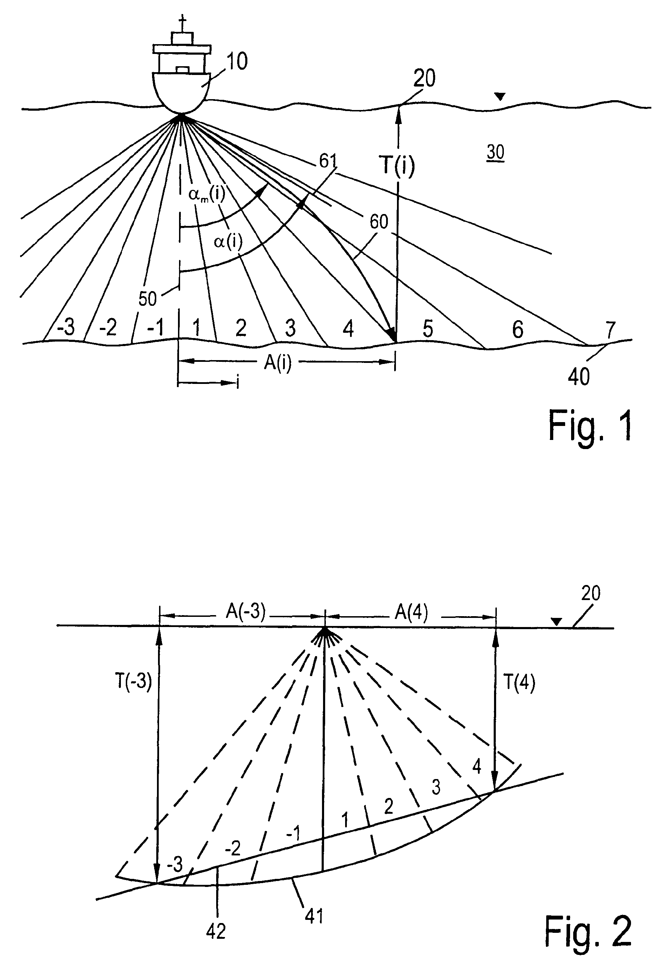

Zur Beschreibung der Meßgeometrie ist in Fig. 1 ein Wasserfahrzeug 10, nachfolgend auch als Vermessungsfahrzeug 10 bezeichnet, auf der Wasseroberfläche 20 eines Gewässers 30 dargestellt. Die Tiefe oder Tiefenwerte T(i) des Gewässers 30 an den jeweiligen Meßpunkten sind durch das Bodenprofil 40 bestimmt. Das Vermessungsfahrzeug 10 ist mit einem Fächerlot ausgerüstet, dessen Fächer prinzipiell durch die teilweise dargestellten Sektoren gekennzeichnet ist. Die einzelnen Sektoren sind durch Zahlenwerte für den Index i bezeichnet. Dabei sind von der senkrechten Lotlinie 50 nach rechts die Sektoren 1 bis 7 und links die Sektoren -1 bis -3 des Fächerlotes abgetragen. Die Sektoren i werden nachfolgend auch als Empfangsrichtungen i bezeichnet.

Vom Vermessungsfahrzeug 10 wird ein Sendeimpuls abgestrahlt, der u.a. im Bereich des Empfangssektors 5 am Gewässerboden 40 gestreut bzw. reflektiert wird und auf dem Schallstrahl 60 den Empfangswandler des Vermessungsfahrzeugs 10 erreicht. Dabei weist die Tangente 61 an den Schallstrahl 60 den am Kiel gemessenen Winkel $\alpha(i)$ bezogen auf die Lotrichtung 50 auf. Der meß- oder einstellbare Winkel $\alpha(i)$ wird zum mittleren Empfangswinkel $\alpha_m(i)$ im Verhältnis der Schallgeschwindigkeiten am Kiel $c_k$ und der mittleren Schallgeschwindigkeit $c_m$ im Gewässer korrigiert und so der korrigierten Empfangsrichtung i, hier i=5, zugeordnet. Der Zusammenhang der Formelgrößen ist durch die Gl. 1

$$\frac{c_k}{c_m} = \frac{\sin \alpha(i)}{\sin \alpha_m(i)} \qquad\qquad (1)$$

beschrieben. Mit einer Annahme für eine mittlere Schallgeschwindigkeit $c_{ma}$, z.B. $c_{ma}$ = 1500 m/s, kann dann der mittlere Empfangswinkel $\alpha_m(i)$ für jeden Sektor des Fächerlots und somit für jede Empfangsrichtung i zu

$$\alpha_m(i) = \arcsin \left( \frac{c_{ma}}{c_k} \cdot \sin \alpha(i) \right) \qquad\qquad (2)$$

bestimmt werden.

Unter Berücksichtigung der für jede Empfangsrichtung i gemessenen Laufzeit t(i) des Lotimpulses ergeben sich dann entsprechend zugeordnet die Tiefe T(i) und die Ablage A(i) zu

$$T(i) = c_{ma} \; \frac{t(i)}{2} \; \cos \alpha_m(i), \qquad\qquad (3)$$

$$A(i) = c_{ma} \; \frac{t(i)}{2} \; \sin \alpha_m(i). \qquad\qquad (4)$$

In Fig. 2 ist ein Ausschnitt des Bodenprofils und des Lotfächer mit den Sektoren -3 bis 4 dargestellt. Mit den in diesen Sektoren gemessenen Laufzeiten wurden ein Bodenprofil 41 berechnet, das einen stark gekrümmten Verlauf aufweist. Dieses Bodenprofil 41 weicht dabei zwischen den Empfangsrichtungen -3 und 4 von dem realen Verlauf des Gewässerbodens stark ab und kann dort durch eine Sehne 42 angenähert werden. Die Steigung dieser Sehne 42 kann als mittlere Steigung S des Bodenprofils 41 nunmehr nach Gleichung (5) berechnet werden

$$S = \frac{T(4) - T(-3)}{A(4) - A(-3)} \qquad\qquad (5),$$

wobei T(-3), T(4) die berechneten Tiefenwerte sowie A(-3), A(4) die berechneten Ablagewerte der jeweiligen Empfangssektoren sind.

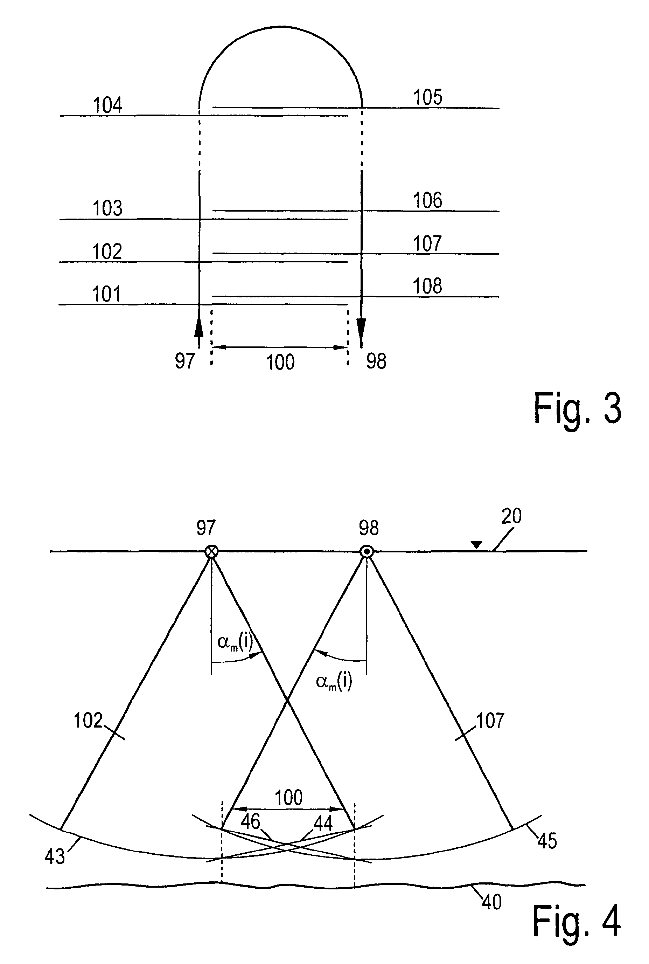

Diese mittlere Steigung S wird derart ermittelt, daß die Steigung des Bodenprofils für jede Empfangsrichtung -3 bis 4, als die Steigung der Sehne zwischen Tiefenwerten nebeneinander liegender Empfangsrichtungen bestimmt wird und daß aus allen diesen Steigungen durch lineare Regression die mittlere Steigung zwischen den äußeren Empfangsrichtungen -3 und 4 des Sektors berechnet wird. Vorteilhafterweise werden dabei Meßfehlerstreuungen mit ausgeglichen. Die auf diese Weise bestimmten Steigungen S des Gewässerbodenprofils werden, wie an Fig. 4 erläutert, zur Korrektur der mittleren Schallgeschwindkeit $c_{ma}$ ausgewertet.

Dazu befährt gemäß Fig. 3 das Wasserfahrzeug das zu vermessende Gebiet in Richtung der Pfeile auf einer Spur, die durch zwei gegenläufige Tracks 97 und 98 mit einem gekrümmten Übergangsbereich 99 dargestellt ist. Dabei ergeben sich als Projektionen dargestellte Lotfolgen 101 bis 107, die sich paarweise in dem überlappungsbereich 100 zwischen den Tracks 97 und 98 überlappen. Auf diese Weise werden bezogen auf die Fahrtrichtung vom rechten Teil des Lotfächers der Lotfolge 102 nahezu die gleichen Bodenelemente erfaßt wie vom rechten Teil des Lotfächers der Lotfolge 107, so daß sich durch die Laufzeitmessungen dieser Lotungen gleiche Tiefenwerte und damit gleiche Steigungen ergeben müßten.

In Fig. 4 sind die Lotfolgen 102 und 107 in einem Schnitt durch das Gewässer mit der Wasseroberfläche 20 und dem Gewässerboden 40 dargestellt. Der 1. Track 97 weist dabei in die Zeichenebene hinein, während der 2. Track 98 aus der Ebene heraus weist. Die Lotfolgen 102 und 107 überlappen sich in dem Überlappungsbereich 100 und die aufgrund der direkten Laufzeitmessungen zu berechnenden Tiefenwerte $T(t_i)$ würden die Bodenprofile 43 und 45 ergeben. Diese Bodenprofile 43 und 45 haben in dem Überlappungsbereich signifikant unterschiedliche mittlere Steigungen entsprechend den Sehnen 44 und 46, die auch vom nahezu ebenen Verlauf des Gewässerbodens 40 abweichen. Diese Abweichungen werden durch die Ausbreitungseigenschaften des Schalls im Wasser hervorgerufen, ergeben sich dabei insbesondere durch den Schallstrahlverlauf in Abhängigkeit von der jeweiligen Schallgeschwindigkeit und können deshalb zur Ermittlung von Korrekturen der angenommenen mittleren Schallgeschwindigkeit $c_{ma}$ genutzt werden.

Weichen die Steigungen $S_1$ und $S_2$ der Sehnen 44 und 46 nur geringfügig voneinander ab, so ist die angenommene mittlere Schallgeschwindigkeit $c_{ma}$ korrekt. Anderenfalls werden durch systematische Änderung der mittleren Schallgeschwindigkeit $c_{ma}$ die Tiefenwerte $T(i)$ des 1. Tracks 97 und des 2. Tracks 98 neu berechnet bis eine optimale Übereinstimmung der Steigungen $S_1$ und $S_2$ erreicht ist. Dieses Verfahren wird dadurch wesentlich vereinfacht, daß die mittlere Schallgeschwindigkeit $c_{ma}$ um einen vorgegebenen kleinen Wert, z.B. $\Delta c_m = 1$ m/s, geändert wird. Mit den Meßwerten des 1. Tracks 97 erfolgt dann die Berechnung einer dritten Steigung $S_3$ im Überlappungsbereich 100 und mit den Meßwerten des 2. Tracks 98 wird eine vierte Steigung $S_4$ berechnet. Die Differenz der Steigungen $S_2 - S_1$ wird zu der Differenz der Steigungen $S_4 - S_3$ ins Verhältnis gesetzt und ergibt einen Korrekturfaktor k

$$ k \ = \ \frac{S_2 \ - \ S_1}{S_4 \ - \ S_3} \qquad\qquad (6) $$

für den Korrekturwert $\Delta c_m$ und somit eine korrigierte mittlere Schallgeschwindigkeit $c_{ma}^{*}$

$$ c_{ma}^{*} \ = \ c_{ma} \ + \ k \ \bullet \ \Delta c_m. \qquad\qquad (7) $$

Eine weitere Anwendung dieses Verfahrens führt in der Regel bereits zu einem optimalen Wert der angenommenen mittleren Schallgeschwindigkeit $c_{ma}$ bzw. $c_{ma}^{*}$.

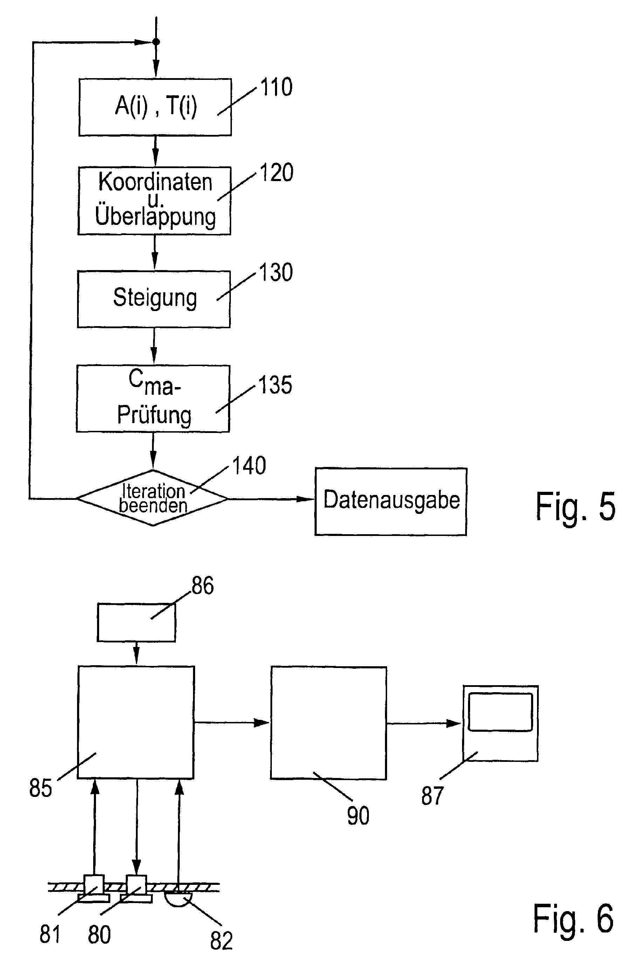

Anhand des Flußdiagramms in Fig. 5 wird die Auswertung der Empfangssignale nach dem erfindungsgemäßen Verfahren verdeutlicht.

Bezogen auf den abgestrahlten Sendeimpuls werden von dem Fächerlot in jedem der ca. 80 Empfangssektoren die vom Gewässerboden reflektierten Lotimpulse empfangen und für jede Empfangsrichtung i die Laufzeiten $t(i)$ des Lotimpulses gemessen. Für die anschließende Auswertung werden diese Laufzeiten $t(i)$, die angenommene mittlere Schallgeschwindigkeit $c_{ma}$ und die am Kiel gemessene Schallgeschwindigkeit $c_k$ an den Tiefen-Ablage-Rechner 110 übertragen und daraus über die geometrischen Beziehungen, wie anhand Fig. 1 dargestellt, die Tiefe $T(i)$ am Auftreffpunkt gemäß Gl. 3 und seine Ablage $A(i)$ von der Lotlinie gemäß Gl. 4 bestimmt.

Da bei der Vermessung eines Gewässers die Tiefenangaben in einem terrestischen, z.B. kartesischen Koordinatensystem, nach geographischer Länge und Breite vorliegen müssen, stehen in dem Koordinatenrechner 120 die Positions- und Navigationsdaten des Vermessungsfahrzeugs, die u.a. mit den Mitteln der GPS-Satellitennavigation exakt vermessen worden ist, an jedem Ort der Tracks zur Verfügung. Damit liegen die Positionen des Fahrzeugs während der Tracks (s. Fig. 3) genau fest und die Ablagewerte der Bodenelemente jeder Lotfolge, die die Querentfernung des Bodenelements bezogen auf die jeweilige Position des Vermessungsfahrzeugs darstellen, können in geographische Längen- und Breitenangaben umgerechnet werden. Nachfolgend werden dann aus den Meßdaten von zwei nebeneinanderliegenden Tracks, diejenigen Lotfolgen ermittelt, bei denen die geographischen Koordinaten der Ablagewerte übereinstimmen bzw. sich nur durch einen geringen vorgegebenen Abstand unterscheiden. Die beispielsweise für zwei Lotfolgen 102 und 107 aufgrund ihrer geographischen Koordinaten übereinstimmenden Ablagewerte bestimmen den Überlappungsbereich 100 in Fig. 3 und 4, dessen Tiefen- und Ablagewerte im nachgeschalteten Steigungsrechner 130 weiter verarbeitet werden. Wenn auch die Bestimmung der Überlappungsbereiche 100 der Lotfolgen 102 und 107 aufgrund der geographischen Koordinaten erfolgen muß, so kann der weiteren Verarbeitung der Meßdaten durchaus eine geeignete ein- oder zwei dimensionale Indizierung zugrunde gelegt werden. In der weiteren Beschreibung wird daher der Index i auch weiterhin zur Kennzeichnung der Tiefen $T(i)$ und Ablagen $A(i)$ benutzt.

Aufeinanderfolgende Meßdaten der Lotfolgen 107 und 102 in Fig. 4 haben Tiefenwerte $T(i)$ und Ablagenwerte $A(i)$ zur Folge, die im Überlappungsbereich 100 je einen Abschnitt der Bodenprofile 45 und 43 bilden. In dem Steigungsrechner 130 werden zunächst für die aufeinanderfolgende Ablagewerte $A(i)$ jeder Lotfolge 102 und 107 in Fig. 4 die Einzel-Steigungen jedes Bodenelements berechnet und mit diesen Steigungswerten durch Anwendung des Rechenverfahrens der linearen Regression die mittleren Steigungen der Bodenprofile 43 und 45 im Überlappungsbereich 100 bestimmt. Diese mittleren Steigungen werden mit $S_1$ und $S_2$ und entsprechen den Steigungen der Sehnen 44 und 46.

Die erste Steigung $S_1$ für die Lotfolge 102 und die zweite Steigung $S_2$ für die Lotfolge 107 werden durch die Prüfoperationen 135 verglichen und die zur Berechnung $A(i)$ und $T(i)$ als Anfangswert geschätzte oder angenommene mittlere Schallgeschwindigkeit $c_{ma}$ als zulässiger Wert bestätigt, wenn die Differenz der Steigungen $S_2$ minus $S_1$ kleiner als 1% (?) der Steigung $S_1$ oder $S_2$ ist. Ist dieses Kriterium erfüllt wird in der Entscheidungstufe 140 die Iteration beendet und die Datenausgabe 145 aktiviert.

Wurde der Anfangswert der angenommenen mittleren Schallgeschwindigkeit $c_{ma}$ als unzureichend bestimmt, wird dieser Anfangswert um einen Korrekturwert, z.B. $\Delta c_m = 1$ m/s, variiert. Im Tiefen-Ablage-Rechner 110 werden die Ablagewerte $A(i)$ und Tiefenwerte $T(i)$ der Lotfolgen 107 und 102 erneut berechnet. Ebenso müssen die geographischen Koordinaten der vermessenen Bodenelemente, die Überlappungsbereiche und die Steigungen ebenfalls erneut berechnet werden. Durch die lineare Regression in der Recheneinheit 130 wird für das Bodenprofil 43 der Lotfolge 102 eine dritte Steigung $S_3$ und für das Bodenprofil 45 der Lotfolge 107 eine vierte Steigung $S_4$ berechnet. Mit den Steigungsdifferenzen $S_2$ minus $S_1$ und $S_4$ minus $S_3$ wird durch Quotientenbildung ein Korrekturfaktor k gemäß Gleichung 6 bestimmt, mit dem der Korrekturwert der Schallgeschwindigkeit $\Delta c_m$ multipliziert wird und eine Verbesserung des geschätzten Anfangswertes der mittleren Schallgeschwindigkeit $c^*_{ma}$ gemäß Gleichung 7 vorgenommen wird. Mit der verbesserten mittleren Schallgeschwindigkeit $c^*_{ma}$ werden durch Neuberechnung die Ablagewerte $A(i)$ und Tiefenwerte $T(i)$ optimiert. Erfahrungsgemäß führt bereits eine zweimalige Anwendung dieser Iteration zu einem optimalen Ergebnis für die angenommene mittlere Schallgeschwindigkeit $c_{ma}$ und somit zu sehr genauen Tiefenwerten.

Bei mehrfacher Durchführung dieses Iterationsprozesses gemäß Fig. 5 lassen sich sehr hohe Genauigkeiten für die Korrektur der Messung erzielen. Entsprechende Simulationen haben jedoch gezeigt, daß bereits die zweimalige Iteration die in der Vermessungstechnik erforderliche hohe Genauigkeit liefert.

Das prinzipielle Blockschaltbild in Fig. 6 zeigt eine Fächerlotanlage in einem Vermessungsfahrzeug. Dabei ist ein Sendewandler 80, ein Empfangswandler 81 und ein Schallgeschwindigkeitssensor 82 zur Messung der Schallgeschwindigkeit $c_k$ am Kiel des Fahrzeugs mit einem Fächerlot 85 verbunden. Üblicherweise benötigt das Fächerlot 85 sämtliche Navigations- und Fahrzeugdaten, wie Kurs, Geschwindigkeit, Positionen nach geographischer Länge und Breite, Roll-, Stampf- und Gierwinkel usw., um eine genaue Kartierung der Meßergebnisse zu ermöglichen. Diese Daten werden über die Navigationsschnittstelle 86 zugeführt. Mit dem Fächerlot 85 ist außerdem eine Datenausgabe in Form einer Anzeige 87 verbunden. Darüber hinaus ist eine Recheneinheit 90 vorgesehen, in der die erfindungsgemäßen Korrekturen der mittleren Schallgeschwindigkeit zur genauen Berechnung der Tiefenwerte und damit des Bodenprofils bestimmt werden.

Der Sendewandler 80 weist eine Richtcharakteristik auf, die quer zur Fahrtrichtung des Fahrzeugs ungerichtet ist, um den ganzen Sektor zu beschallen, der von dem Empfangsfächer des Empfangswandlers 81 überdeckt wird. In Fahrzeuglängsrichtung ist der Sendewandler 80 stark gebündelt, um die Schallabstrahlung im Nutzbereich zu konzentrieren.

Als Empfangsfächer des Empfangswandlers 81 sind dabei alle Empfangsrichtungen, d.h. etwa 2°-schmale Empfangssektoren vorgegeben, die, wie in Fig. 1 prinzipiell dargestellt, den Bereich von der linken zur rechten Fahrzeugseite hin überdecken. Durch entsprechende Richtungsbildner ist die Selektion der schmalen Empfangssektoren i gewährleistet. Wie ebenfalls der Fig. 1 zu entnehmen ist, sind den Empfangssektoren i Auftreffpunkte am Gewässerboden mit unterschiedlichen Entfernungen zugeordnet. Daher ergeben sich für die gestreuten Lotimpulse je nach Empfangswinkel unterschiedliche Laufzeiten $t(i)$, die vom Fächerlot 85 gemessen werden.

Ein weiterer Sensor 82 am Fahrzeugboden mißt die Schallgeschwindigkeit $c_k$ in unmittelbarer Nähe des Empfangswandlers 81, um den am Wandler 81 eingestellten Empfangswinkel $\alpha(i)$ zu bestimmen.

Unter Berücksichtigung der geometrischen Beziehungen, der mittleren Schallgeschwindigkeit $c_{ma}$ sowie der

Navigationsdaten des Vermessungsfahrzeugs sind dann die Tiefenwerte T(i) am jeweiligen Auftreffpunkt ermittelbar und als das gemessenes Bodenprofil ebenfalls auf der Anzeige 87 darstellbar. Mit diesen Messwerten werden in der Recheneinheit 90, wie bereits anhand des Flußdiagramms der Fig. 5 beschrieben, die korrigierte mittlere Schallgeschwindigkeit $c_{ma}$ bzw $c^*_{ma}$ und verbesserten Tiefen- und Ablagewerte des Gewässerbodenprofils berechnet.

**Patentansprüche**

1. Verfahren zum Bestimmen der mittleren Schallgeschwindigkeit mit einem auf einem Wasserfahrzeug installierten Fächerlot, bei dem aufgrund jedes ausgelösten Sendeimpulses für eine Vielzahl vorgegebener Empfangsrichtungen des Fächerlotes von Bodenelementen eines Gewässerbodenprofils reflektierte bzw. gestreute Lotimpulse empfangen, deren Laufzeiten gemessen und aus Laufzeit, Empfangsrichtung und einem Vorgabewert für die mittlere Schallgeschwindigkeit mit einem bekannten Regressionsverfahren Tiefenwerte ermittelt werden, **dadurch gekennzeichnet, daß** von dem Wasserfahrzeug (10) der zu vermessende Gewässerboden (40) auf mindestens zwei im wesentlichen parallelen Tracks (97, 98) derart überfahren wird, daß die Fächerlotungen (102,107) überlappen, daß für eine Folge von Bodenelementen in dem Überlappungsbereich (100) der Fächerlotungen (102, 107) von mindestens zwei Tracks (97, 98) mit den Laufzeitmessungen t(i) jedes Lotfächers die zugehörigen Tiefenwerte T(i) berechnet und Steigungen S der durch die Tiefenwerte ermittelten Gewässerbodenprofile bestimmt werden, wobei eine 1. Steigung $S_1$ mit den Laufzeitmessungen des 1. Tracks (97) und eine 2. Steigung $S_2$ mit den Laufzeitmessungen des 2. Tracks (98) bestimmt werden, und daß der Vorgabewert für die mittlere Schallgeschwindigkeit $c_{ma}$ dann korrigiert wird, wenn eine bei einem Vergleich der 1. und 2. Steigung ermittelte Steigungsdifferenz von einem vorgebbaren Minimum abweicht.

2. Verfahren nach Anspruch 1 **dadurch gekennzeichnet,daß** zum Ermitteln des Korrekturwertes der Vorgabewert der Schallgeschwindigkeit $c_{ma}$ um einen kleinen Betrag, vorzugsweise $\Delta c_m = 1$ m/s, geändert wird, daß für die Folge von Bodenelementen mit dem geänderten Vorgabewert der Schallgeschwindigkeit $c^*_{ma}$ , mit den Laufzeitmessungen t(i) des 1. Tracks eine 3. Steigung $S_3$ des Gewässerbodenprofils, mit den Laufzeitmessungen t(i) des 2. Tracks eine 4. Steigung $S_4$ und aus 3. und 4. Steigung eine 2. Steigungsdifferenz berechnet werden, daß mit dem Verhältnis k der 1. und 2. Steigungsdifferenz der Korrekturwert für den Vorgabewert der Schallgeschwindigkeit $c_{ma}$ ermittelt wird und daß mit dem korrigierten Vorgabewert der Schallgeschwindigkeit die 1. Steigungsdifferenz für den Vergleich erneut berechnet wird.

3. Verfahren nach Anspruch 1 oder 2 **dadurch gekennzeichnet, daß** für jeden Track (97, 98) die Steigung $S_1$, $S_2$, $S_3$, $S_4$ des Gewässerbodenprofils (41, 43, 45) in dem Überlappungsbereich (100) durch Anwendung der linearen Regression auf die für jedes einzelne Bodenelement bestimmte lokale Steigung des Gewässerbodens ermittelt wird.

4. Verfahren nach Anspruch 1 oder 2 **dadurch** gekannzeichnet, daß das Überfahren des Gewässerbodens (40) in aufeinanderfolgend gegenläufigen Tracks (97, 98) erfolgt.

5. Verfahren nach einem der Ansprüche 1 bis 3 **dadurch gekennzeichnet, daß** der parallele Abstand der Tracks (97, 98) durch die Meßgeometrie des Fächerlots (85) bestimmt ist.

6. Verfahren nach einem der Ansprüche 1 bis 5 **dadurch gekennzeichnet, daß** die Position des Wasserfahrzeugs (10) mit einem Satellitennavigationssystem vermessen und die auf die Position des Wasserfahrzeugs (10) bezogene Lage der Bodenelemente in einem terrestischen Koordinatensystem nach geographischer Länge und Breite bestimmt wird.

**Claims**

1. Method for determination of the mean speed of sound by a fan-beam echo sounder which is installed on a water craft, in which reflected or scattered echo-sounding pulses are received on the basis of each triggered transmission pulse for a large number of predetermined reception directions of the fan-beam echo sounder from bottom elements of a waterway bottom profile, their delay times are measured and depth values are determined from the delay time, reception direction and a preset value for the mean speed of sound using a known regression method, **characterized in that** the water craft (10) moves over the waterway bottom (40) to be measured on at least two essentially parallel tracks (97, 98) in such a way that the fan-beam echo soundings (102, 107) overlap, in such a way that the associated depth values T(i) for a sequence of bottom elements in the overlapping area (100) of the fan-beam echo soundings (102, 107) of at least two tracks (97, 98) are calculated using the delay time measurements t(i) for each echo-sounding fan beam, and gradients S of the waterway bottom profiles determined by the depth values are determined, with a first gradient $S_1$ being determined using the delay time measurements for the first track (97), and a second gradient $S_2$ being determined using the delay time measurements for the second track (98) and such that the preset value for the mean speed of sound $c_{ma}$ is corrected when a gradient difference determined from a comparison of the first and second gradients differs from a predeterminable minimum.

2. Method according to Claim 1, **characterized in that** the preset value for the speed of sound $c_{ma}$ is changed by a small amount, preferably $\Delta c_m$ = 1 m/s, in order to determine the correction value, **in that** a third gradient $S_3$ of the waterway bottom profile is calculated for the sequence of bottom elements using the changed preset value of the speed of sound $c^*_{ma}$ with the delay time measurements t(i) for the first track, a fourth gradient $S_4$ is calculated using the delay time measurements t(i) for the second track, and a second gradient difference is calculated from the third and fourth gradient, in such a way that the correction value for the preset value of the speed of sound $c_{ma}$ is determined using the ratio k of the first and second gradient differences, and in such a way that the first gradient difference is calculated for the comparison once again, using the corrected preset value for the speed of sound.

3. Method according to Claim 1 or 2, **characterized in that** the gradient $S_1$, $S_2$, $S_3$, $S_4$ of the waterway bottom profile (41, 43, 45) in the overlapping area (100) is determined for each track (97, 98) by the application of linear regression to the local gradient of the waterway bottom as determined for each individual bottom element.

4. Method according to Claim 1 or 2, **characterized in that** the process of moving over the waterway bottom (40) is carried out in successive tracks (97, 98) in opposite directions.

5. Method according to one of Claims 1 to 3, **characterized in that** the parallel separation between the tracks (97, 98) is determined by the measurement geometry of the fan-beam echo sounder (85).

6. Method according to one of Claims 1 to 5, **characterized in that** the position of the water craft (10) is measured using a satellite navigation system, and the position of the bottom elements with respect to the position of the water craft (10) is determined in a terrestrial coordinate system, using the geographical latitude and longitude.

**Revendications**

1. Procédé pour déterminer la vitesse moyenne du son avec une sonde en éventail installée sur un navire, dans lequel des impulsions de sonde réfléchies ou dispersées par un profil de fond de l'eau sont reçues pour un grand nombre de sens de réception prédéfinis de la sonde en éventail, leurs temps de propagation sont mesurés et des valeurs de la profondeur sont déterminées avec un procédé de régression connu à partir du temps de propagation, du sens de réception et d'une valeur allouée pour la vitesse moyenne du son, **caractérisé en ce que** le navire (10) passe au-dessus du fond de l'eau mesuré (40) sur au moins deux pistes (97, 98) essentiellement parallèles de telle sorte que les sondages en éventail (102, 107) se chevauchent, que pour une séquence d'éléments du fond dans la zone de chevauchement (100) des sondages en éventail (102, 107) d'au moins deux pistes (97, 98), les valeurs correspondantes de la profondeur T(i) sont calculées avec les mesures des temps de propagation t(i) de chaque éventail de sondage et les pentes S des profils du fond de l'eau déterminés par les valeurs de la profondeur sont déterminées, une $1^{\text{ère}}$ pente $S_1$ étant déterminée avec les mesures des temps de propagation de la $1^{\text{ère}}$ piste (97) et une $2^{\text{ème}}$ pente $S_2$ étant déterminée avec les mesures des temps de propagation de la $2^{\text{ème}}$ piste (98), et que la valeur allouée pour la vitesse moyenne du son $c_{ma}$ est corrigée lorsqu'une différence de pente déterminée lors d'une comparaison entre la $1^{\text{ère}}$ et la $2^{\text{ème}}$ pente s'écarte d'un minimum pouvant être prédéfini.

2. Procédé selon la revendication 1, **caractérisé en ce que** pour déterminer la valeur de correction de la valeur allouée, la vitesse du son $c_{ma}$ est modifiée d'un petit montant, de préférence $\Delta c_m$ = 1 m/s, que pour la séquence d'éléments du fond, une $3^{\text{ème}}$ pente $S_3$ du profil du fond de l'eau est calculée à l'aide de la valeur allouée modifiée de la vitesse du son $c^*_{ma}$ avec les mesures des temps de propagation t(i) de la $1^{\text{ère}}$ piste, une $4^{\text{ème}}$ pente $S_4$ est calculée à l'aide des mesures des temps de propagation t (i) de la $2^{\text{ème}}$ piste et une $2^{\text{ème}}$ différence de pente est calculée à partir de la $3^{\text{ème}}$ et de la $4^{\text{ème}}$ pente, que la valeur de correction de la vitesse du son $c_{ma}$ est déterminée à l'aide du rapport k de la $1^{\text{ère}}$ et de la $2^{\text{ème}}$ différence de pente et que la $1^{\text{ère}}$ différence de pente est de nouveau calculée pour la comparaison à l'aide de la valeur allouée corrigée de la vitesse du son.

3. Procédé selon la revendication 1 ou 2, **caractérisé en ce que** la pente $S_1$, $S_2$, $S_3$, $S_4$ du profil du fond de l'eau (41, 43, 45) est déterminée dans la zone de chevauchement (100) pour chaque piste (97, 98) en utilisant la régression linéaire sur la pente locale du fond de l'eau déterminée pour chaque élément du fond individuel.

4. Procédé selon la revendication 1 ou 2, **caractérisé en ce que** le franchissement du fond de l'eau (40) s'effectue dans des pistes (97, 98) qui se suivent en sens inverse.

5. Procédé selon l'une des revendications 1 à 3, **caractérisé en ce que** l'écart parallèle entre les pistes (97, 98) est déterminé par la géométrie de mesure de la sonde en éventail (85).

6. Procédé selon l'une des revendications 1 à 5, **caractérisé en ce que** la position du navire (10) est mesurée avec un système de navigation par satellite et la position des éléments du fond rapportée à la position du navire (10) est déterminée dans un système de coordonnées terrestres en fonction de la longitude et de la latitude.

Fig. 1

Fig. 2

104  105

103  106

107

102  107

101  108

97  100  98

# Fig. 3

20

97  98

$\alpha_m(i)$  $\alpha_m(i)$

102  107

100

43  46  44  45

40

# Fig. 4

Fig. 5

Fig. 6